# EUROPEAN PATENT SPECIFICATION

(11) **EP 4 080 272 B1**
(45) Date of publication and mention of the grant of the patent: **23.10.2024**
(21) Application number: 21169364.3
(22) Date of filing: 20.04.2021
(51) Int. Cl.: G02F 1/025, G02F 1/21, G02F 1/225

(54) **SEGMENTED OPTICAL WAVEGUIDE MODULATOR**
SEGMENTIERTER OPTISCHER WELLENLEITERMODULATOR
MODULATEUR À GUIDE D'ONDE OPTIQUE SEGMENTÉ

(43) Date of publication of application: 26.10.2022
(73) Proprietor: Nokia Solutions and Networks Oy, 02610 Espoo (FI)
(72) Inventor: GILL, Douglas, South Orange, 07079 (US); STRESHINSKY, Matthew, Taos, 87571 (US); LIM, Daihyun, Tenafly, 07670 (US); GUAN, Hang, Jersey City, 07310 (US)
(74) Representative: MERH-IP Matias Erny Reichl Hoffmann Patentanwälte PartG mbB

(56) References cited:
- JP-A- 2017 211 607
- US-A1- 2008 089 634
- US-A1- 2018 341 164

## Description

### TECHNICAL FIELD

The present invention generally relates to optical modulators, and more particularly relates to a broad-band optical waveguide modulator with segmented electrodes.

### BACKGROUND

Broad-band optical communications typically require high-speed electro-optical modulators (EOM) to modulate light at a desired data rate. One common type of a broad-band EOM is a Mach-Zehnder modulator (MZM), which uses an optical waveguide structure forming an Mach-Zehnder interferometer (MZI), with RF-driven optical phase modulators in each waveguide arm. The waveguide arms of the MZM are typically formed in a suitable semiconductor or other electro-optic material such as LiNbOs, so that light propagation in the waveguide arms may be controlled by applying a voltage. Such a waveguide modulator may be implemented in an opto-electronic chip as a photonic integrated circuit (PIC).

A silicon photonics (SiP) platform, e.g., based on a Silicon-on-Insulator (SOI) technology, may be particularly attractive for implementing broad-band EOMs, which can, e.g., enable a natural integration with CMOS-based high-speed electronic drivers. In the SiP platform, voltage-controlled optical phase modulators may be formed by incorporating pin junctions into optical waveguides, such as a waveguide arm of an MZM. An electrode extending along a length of the optical waveguide in an electrical contact with the pin junction may be used to either inject electrical charge carriers (forward bias) or deplete carriers (reverse bias) in the optical waveguide core, thereby modulating the effective refractive index of the waveguide. At modulation rates in the range of tens of gigabits per second (Gb/s), electrical transmission lines formed with properly terminated travelling-wave (TW) electrodes are typically used.

The greater is the length of the electrode that interacts with light in the optical waveguide, the lower is the drive voltage needed for a same optical modulation depth. Thus in TW EOMs there is a tradeoff between required drive voltage and bandwidth, where making the length where a modulating radio frequency (RF) signal interacts with an optical signal longer may generally rise the modulator power efficiency, but at the cost of a decrease in the transmitter bandwidth and an increase in optical loss.

Accordingly, it may be understood that there may be significant problems and shortcomings associated with current solutions and technologies for providing high-bandwidth optical waveguide modulators.

US 2018/341164 A1 discloses a multi-section optical modulator and related method wherein two waveguide arms traverse a plurality of successive modulating sections. Specifically, a differential drive signal is applied separately to each waveguide arm of each modulating sections in synchronism with the transmission of light along the waveguide arms, effecting a dual differential driving of each section. By suitably selecting the number of modulating sections and the section length, a high modulation bandwidth and a high modulation efficiency may be achieved simultaneously for a given peak-to-peak voltage swing of the drive signal.

US 2008/089634 A1 discloses an optical modulator formed to include an adjustable drive arrangement for dynamically adjusting the effective length of the optical signals path(s) within the modulator. In particular, each modulator arm is partitioned into a plurality of segments, with each segment coupled to a separate electrical signal driver. Therefore, the effective length of each modulator arm will be a function of the number of drivers that are activated for each arm at any given point in time. A feedback arrangement may be used with the plurality of drivers to dynamically adjust the operation of the modulator by measuring the extinction ratio as a function of optical power, turning "on" of "off" individual drivers accordingly.

JP 2017 211607 A discloses an optical modulator comprises K pieces of drive circuits S1 and S2 driving an optical modulator by one or more modulation electric signals, and a pair of optical waveguide arms comprises N pieces of areas equipped with a joint configured to include an area of a first doping polarity and an area of a second doping polarity opposite the first doping polarity. K pieces of the drive circuits are electrically connected to N pieces of the areas. In M pieces of areas out of N pieces of the areas, the optical waveguide of one arm is configured such that a side opposite other arm is the area of the first doping polarity and other arm side is the area of the second doping polarity, and the optical waveguide of the other arm is configured such that a side opposite the one arm is the area of the first doping polarity, and the one arm side is a first area serving as the area of the second doping polarity.

### SUMMARY

The invention is as defined in the appended set of claims.

Some embodiments may implement a bandwidth/drive-voltage tradeoff in an TW EOM by incorporating multiple TW modulation segments along an individual optical waveguide of a EOM device. By combining the modulation response of multiple TW modulation segments in a cumulative way, e.g., a relatively low drive voltage can be used. While the modulation bandwidth of such devices may be increased by using a sequence of TW modulation segments along an individual optical waveguide, performance shortcomings may be associated with this approach. For example, it may be difficult to distribute well-timed RF drive signals to a sequence of spatially distinct regions of the optical waveguide. Furthermore, the quality of the RF drive signal delivered to later segments may be degraded, due to e.g. a frequency dependent loss resulting from the longer travel distance. Some of the embodiments herein may address such performance issues for optical modulators with segmented TW drive electrodes.

Accordingly, an aspect of the present disclosure relates to an apparatus comprising a segmented optical modulator, the segmented optical modulator comprising an optical waveguide along a planar surface of a substrate, a plurality of electrodes disposed along the planar surface of the substrate, and an electrical drive circuit; the plurality of electrodes comprises one or more first electrodes being located along a first segment of the optical waveguide to form a first modulator segment therewith, and one or more second electrodes being located along a separate second segment of the optical waveguide to form a second modulator segment therewith; the electrical drive circuit is configured to transmit RF drive signals to both the first and second electrodes to modulate an optical carrier propagating along the optical waveguide; wherein the segmented optical modulator is configured so that the first and second modulator segments modulate the optical carrier in distinct frequency regions. The electrical drive circuit may be configured to provide the RF drive signals to both the first and second electrodes to modulate a same data value onto the optical carrier in a same symbol period.

In some implementations the one or more first electrodes may have a different length than the one or more second electrodes.

In some implementations the plurality of electrodes may comprises a passband RF filter located in a signal path from the electrical drive circuit to the electrodes of the first or second modulator segment. In some implementations the passband RF filter may comprise at least one directional RF coupler. In some implementations the at least one directional RF coupler may comprise at least one dual directional RF coupler. In some implementations the at least one directional RF coupler includes an end segment of one of the first or second electrodes.

In any of the above implementations comprising a passband RF filter, the passband RF filter may be electrically connected between the first and second modulator segments. In some of such implementations, the first and second modulator segments may comprise, respectively, two first electrodes and two second electrodes, and the passband RF filter may comprise first and second dual directional RF couplers connecting output ends of the two first electrodes to input ends of the two second electrodes, wherein the first and second dual directional RF couplers cross between the first and second electrodes.

In any of the above implementations comprising a passband RF filter, the passband RF filter may have a passband extending beyond a 3 dB modulation bandwidth of the second modulator segment.

In some implementations, the one or more first electrodes may comprise one or more resonant stub electrodes having a resonance at an RF drive frequency of the electrical drive circuit. In some of such implementations, the first segment of the optical waveguide may comprise a modulating segment and a non-modulating segment, wherein the modulating segment has a length of at most one half of one of the resonant stub electrodes. In any of the above implementations wherein the one or more first electrodes comprise one or more resonant stub electrodes, the one or more second electrodes may be configured to operate as travelling wave electrodes for RF drive signals of the electrical drive circuit. In some implementations, the resonant-stub electrode may comprise a segment extending away from the optical waveguide. In any of the above implementations wherein the one or more first electrodes comprise one or more resonant stub electrodes, the plurality of electrodes may further comprise one or more third electrodes being located along a third segment of the optical waveguide to form a third modulator segment therewith, the segmented optical modulator further comprising a passband RF filter disposed in a signal path from the electrical drive circuit to the one or more third electrodes, wherein the one or more third electrodes are configured as travelling-wave electrodes for those of the RF drive signals provided thereto.

In some implementations, the apparatus may comprise a segmented Mach-Zehnder modulator (MZM), the segmented MZM comprising two instances of the segmented optical modulator in accordance with any of the above implementations thereof, with two instances of the optical waveguide along the planar surface of the substrate optically connected to form two arms of the MZM.

### BRIEF DESCRIPTION OF THE DRAWINGS

Embodiments disclosed herein will be described in greater detail with reference to the accompanying drawings which represent preferred embodiments thereof, in which like elements are indicated with like reference numerals, and wherein:
FIG. 1 is a schematic diagram of a multi-segment travelling-wave optical waveguide modulator with individually-driven modulator segments and segment-dependent RF filtering;
FIG. 2 is a graph schematically illustrating an expected electro-optic (EO) spectral response of an example of the modulator of FIG. 1, in which frequency-complementary contributions are received from two modulator segments;
FIG. 3 is a schematic diagram of a multi-segment travelling-wave optical waveguide modulator with two commonly-driven modulator segments and passband RF filtering of the drive signals between successive segments;
FIG. 4 is a schematic diagram of an embodiment of the multi-segment travelling-wave optical modulator of FIG. 1 with an on-chip directional RF coupler configured as a passband RF filter;
FIG. 5 is a schematic diagram of an embodiment of the multi-segment travelling-wave optical modulator of FIG. 3 with inter-segment RF filtering by an on-chip directional RF coupler;
FIG. 6 is a schematic diagram illustrating directional RF couplers and expected transmission characteristics thereof for examples of a single-segment coupler (top panel), a two-segment coupler (middle panel), and a three-segment coupler (bottom panel);
FIG. 7 is a schematic diagram of an example multi-segment travelling-wave Mach-Zehnder modulator (MZM) with RF filtering by on-chip directional RF couplers between two commonly driven modulator segments;
FIG. 8 is a schematic diagram of an example multi-segment travelling-wave Mach-Zehnder optical modulator (MZM) with segment-specific RF filters formed by on-chip directional RF couplers;
FIG. 9 is a graph schematically illustrating an expected spectral response of an example of the modulator of FIG. 8, in which complementary contributions are received from three modulator segments;
FIG. 10 is a schematic diagram of a multi-segment optical modulator including a TW modulator segment and an RF-resonant modulator segment supporting different modulation spectrum sub-bands;
FIG. 11 is a schematic diagram of a multi-segment MZM with a TW modulator segment and two RF-resonant modulator segments supporting three different RF modulation spectrum sub-bands;
FIG. 12 is a graph schematically illustrating a spectral response of an example of the modulator of FIG. 11 where the spectral response receives frequency-complementary contributions from three modulator segments;
FIG. 13 is a schematic diagram illustrating an example of an optical modulator chip bonded to an electrical IC chip, for which a portion of a resonant-stub electrode of one modulator segment is disposed on the IC chip;
FIG. 14 is a schematic diagram illustrating an example of an optical modulator chip bonded to an electrical IC chip, for which a coupling electrode segment of a dual directional RF filter of one modulator segment is disposed on the IC chip;
FIG. 15 is a schematic diagram of an example of a lateral pin junction in an optical waveguide;
FIG. 16 is a schematic diagram of an example of an interdigitated pin junction in an optical waveguide.

### DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits are omitted so as not to obscure the description of the present invention.

Furthermore, the following abbreviations and acronyms may be used in the present document:
"CMOS" Complementary Metal-Oxide-Semiconductor
"GaAs" Gallium Arsenide
"InP" Indium Phosphide
"Si" Silicon
"SiO2" Silicon Dioxide
"LiNbO3" Lithium Niobate
"PIC" Photonic Integrated Circuit
"SOI" Silicon on Insulator
"SiP" Silicon Photonics
"RF" Radio Frequency
"DC" Direct Current
"AC" Alternate Current
"TW" Travelling Wave

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise. The term "electrically connected" and its derivatives encompasses both DC and AC connections, unless explicitly stated otherwise. Herein, the term pin junction encompasses both strict pin junctions having only contacting p-doped and n-doped regions and p/i/n junctions having a region of substantially intrinsic conductivity located between the p-doped and n-doped regions. The term "differential signal" refers to a signal that is transmitted using two single-ended signals having about complementary AC components. The term "inverted differential signal" refers to a differential signal having AC components of its constituent single-ended signals inverted relative to those of a reference differential signal, or refers to a differential signal having high-low and low-high transitions switched. The term "substrate" encompasses single and multi-layer structures.

A traveling wave (TW) electrode supports propagation of an RF operating signal there along. Typical TW electrodes usually are longer than about 1/10^{th} of a smallest operating wavelength for an RF signal propagating along the electrode. TW electrodes are often electrically terminated to, at least, partially suppress back reflections of the RF signal at their ends, or even to totally suppress such back reflections. For example, such an electrical termination may be a matched electrical connection to a chip ground or a DC source.

The term "EO interaction length" refers to a length of an optical waveguide along which an approximately co-propagating RF signal can vary the effective refractive index of the optical waveguide, e.g. by means of a Kerr effect, a Pockels effect, or injection and/or depletion of electric charge carriers.

The present disclosure describes examples of segmented electro-optic modulators (EOMs) and methods of operating such EOMs. In various examples, at least one of the segments of the EOM has a different RF spectral response to the driving signal than at least another one of the modulator segments. Different modulator segments of the EOM can be individually configured to modulate an optical carrier propagating therealong in distinct frequency regions, while modulating a same data value onto the optical carrier in a same symbol period. This may include the modulator segments providing contributions into the overall EO spectral response of the EOM that have recognizably different spectral profiles, which are different more than in overall amplitude, which may include substantially non-overlapping portions. Here, "substantially non-overlapping" may mean that there are sub-bands within a modulation bandwidth of the EOM, wherein the contributions of different modulator segments differ by at least 3 dB, or by at least 5 dB, or by 10 dB or greater in some embodiments. In various example described herein, one of the modulator segments may be configured to predominantly modulate the optical carrier at some lower frequencies, e.g. a lower-frequency sub-band of a target EOM bandwidth, while another modulator segment of the same EOM may be configured to predominantly modulate the optical carrier at some higher frequencies, or at a higher-frequency sub-band of the target EOM bandwidth. In some embodiments, different modulator segments of the EOM may be configured for a target performance metric in their respective modulation spectrum sub-bands. By way of example, an EOM may include one modulator segment configured to modulate input light within a 45 GHz to 65 GHz frequency band, and another modulator segment configured to modulate the light predominantly at frequencies of about 45 GHz and smaller. This 'spectral stitching' of the RF spectral responses of different segments of the same EOM may be implemented such that their combined, or cumulative, effect results in a 65 GHz RF modulation bandwidth, which exceeds the modulation bandwidth of each individual modulator segment. Optimizing the modulation efficiency of individual modulator segments within distinct, at least partially non-overlapping, RF sub-bands may enhance the bandwidth of the EOM, for example, at high frequencies. Embodiments of the multi-segment EOM may include one or more passband RF filters at driver input(s) of specific modulator segment(s) with low-frequency cut-off(s), typically in a GHz frequency range, and one or more other modulator segments of the EOM configured for modulating at the lower RF frequencies. Some embodiments may include modulator segments having one or more electrodes configured to operate as one of an RF bandpass filter or an RF resonator for RF drive signals of the EOM.

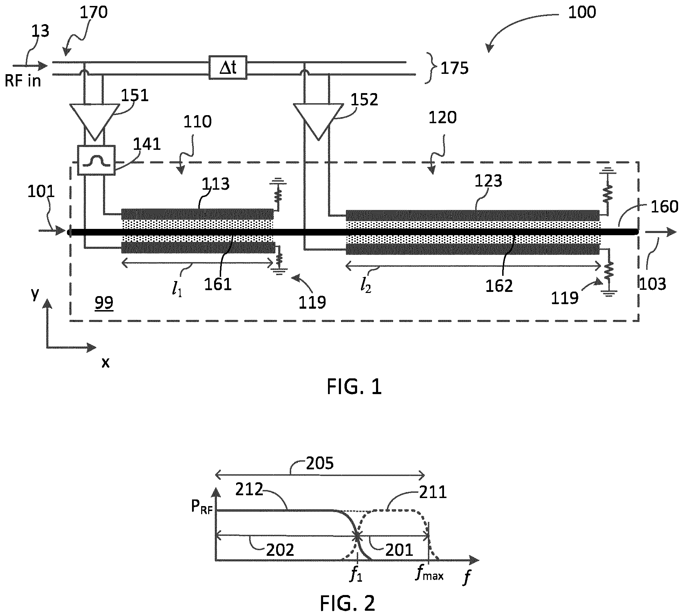

FIG. 1 schematically illustrates an example EOM 100 having different optical modulator segments (OMSs) configured to predominantly modulate an optical carrier, i.e. input light 101, in different frequency regions, e.g., substantially distinct frequency sub-bands, as schematically indicated at 201 and 202 in FIG. 2. These frequency regions may be at least partially complementary, so that the overall, or cumulative, modulation frequency band 205 of the EOM 100 may be greater than the modulation bandwidths of individual segments. In the illustrative example of FIG. 1, the EOM 100 includes two OMSs, which are optically connected in series, a first optical modulator segment (OMS) 110 of length *l*₁ and a second OMS 120 of length *l*₂. Each of the two OMS 110 and 120 includes at least one optical waveguide segment 161, 162, and one or more drive electrodes 113, 123. Each of the drive electrodes 113, 123 has at least a segment of a corresponding length *l*₁ or /₂ extending adjacent to the at least one optical waveguide segment of the corresponding OMS to modulate light propagating therein. An electrical drive circuit 151, 152 may be provided to deliver RF drive signals to the two drive electrodes 113, 123 for modulating the input light 101 as it propagates through the respective OMSs. While FIG. 1 illustrates the drive electrodes 113, 123, as being paired, and the electrical drive circuits 151, 152 as being connected to operate said paired electrodes 113, 123 differentially, the electrical drive circuits 151, 152 may be non-differential, and the drive electrodes 113, 123 may be unpaired in other embodiments.

The optical waveguide segments 161 and 162 of the two OMSs are different segments of a same optical waveguide 160 disposed along a planar surface of a substrate 99 and allow the EO modulation of light propagating therein by RF signals applied to the corresponding adjacent electrodes 113 or 123. The EO modulation may be effected, for example, by means of a Pockels effect, or Kerr effect. In some embodiments the EO modulation may be effected by injection or depletion of free charge carriers due to a so called plasma dispersion effect.

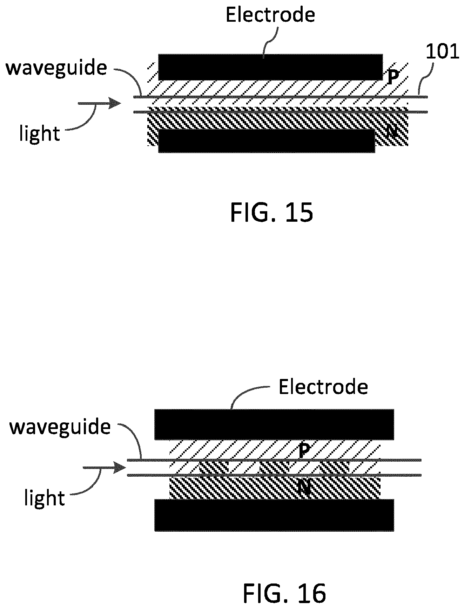

In some embodiments, the optical waveguide segments 161, 162 may each be formed with an electro-optic material, such as but not exclusively LiNbO3. In some embodiments, parts, e.g., core regions, of the optical waveguide segments 161, 162 may be formed with a semiconductor such as silicon (Si) or group III-V semiconductor. In such semiconductor embodiments, optical waveguide segments 161, 162 have a pin junction extending there along, with pairs of electrodes 113 or 123 providing electrical contacts to the p-doped side (anode electrode) and n-doped side (cathode electrode) thereof along the electrode's lengths. Examples of pin junction configurations for such optical waveguide segments are illustrated in FIGs. 15 and 16. By varying a voltage across the pin junction, the refractive index in the waveguide may be modulated, so that an optical waveguide segment having a pin junction extending therealong may function as an optical phase modulator (OPM). In some embodiments the optical waveguide segments with a pin junction may be reversed-biased to operate as carrier-depletion OPMs, having a voltage-controlled carrier depletion region or regions in the optical waveguide. In the context of this specification, a segment of an optical waveguide which effective refractive index may be electro-optically controlled along the segment's length by electrical signals at adjacent electrodes may be referred to as an EO modulating segment. In the example embodiment illustrated in FIG. 1, pin junction regions are indicated with shaded areas between the electrodes.

The electrodes 113, 123 of the two OMS may be travelling-wave (TW) electrodes, or adjacent pairs thereof, for the RF drive signals provided thereto, and may have an input end to which a corresponding one of the RF drive signals is fed, and an output end connected to a suitable lumped electrical termination 119. Terminations 119 may be configured to partially or substantially suppress back reflections of the RF signals. In the illustrated example the electrodes are terminated, e.g., by impedance matched electrical connections to ground or to one or more DC voltage sources to provide a DC bias.

The first OMS 110 may be configured for modulating input light 101 at higher frequencies than the second OMS 120, e.g. in the upper modulation sub-band 201, while the second OMS 120 may be configured for modulating the light predominantly in the lower-frequency sub-band 202. In some embodiments the first OMS 11, may be shorter than the second OMS 120, i.e. *l*₁ < *l*₂. Since higher RF frequencies experience comparatively greater attenuation when propagating along a TW electrode, a shorter OMS 110 may support a greater modulation bandwidth.

The electrical drive circuit of the EOM 100 may be configured to deliver RF drive signals to the two OMS 110, 120 that differ in spectrum and/or bandwidth. For example, in embodiments with a target modulation bandwidth BWₜₒₜₐₗ of the EOM from *f*ₘᵢₙ to *f*ₘₐₓ, the electrical drive signals delivered to the electrodes 113 of the first OMS 110 may contain predominantly high-frequency components in a frequency range from *f*₁ > fₘᵢₙ to*f*ₘₐₓ, with the lower-frequency components below *f*₁ suppressed or at least attenuated. The lower-frequency components *f*ₘᵢₙ ≤ *f* ≤ *f*₁ of the target modulation band may be delivered to the electrodes 123 of the second OMS 120.

In the illustrated embodiment, the electrical drive circuit of the EOM 100 includes first and second RF drivers 151 and 152 connected to separately drive the first and second OMS 110, 120, respectively. In some embodiments the RF drivers 151 and 152 may be differential RF drivers outputting differential RF signals, which single-ended components are fed to pairs of electrodes 113 or 123 for differentially driving the respective OMSs. In some embodiments the RF drivers 151 and 152 may be configured to provide RF drive signals that differ in spectrum. In some embodiments a passband RF filter 141 may be connected between the first RF driver 151 and the electrodes 113 of the first OMS 110, while the second RF driver 152 may be connected to the electrodes 113 of the second OMS 120 directly, i.e. in the absence of a pass-band filter therebetween. In some embodiments a second, different passband RF filter (not shown) may be connected between the second RF driver 152 and the electrodes 123 of the second OMS 120, so that the RF drive signals delivered to OMSs 110 and 120 differ in spectrum.

The passband filter 141 may have a passband at a high-frequency end of the signal bandwidth or a target modulation bandwidth of the EOM, e.g. it may correspond to a modulation sub-band 201 illustrated in FIG. 2. In some embodiments the passband of filter 141, defined e.g. at a -3dB level, may extend beyond a 3 dB modulation bandwidth of the second OMS 120; i.e. it may include frequencies that the second OMS 120 substantially attenuates, e.g. by at least 3dB, or by at least 5 dB, or even 10 dB or greater in some embodiments, for example due the longer length of the electrodes of the second OMS 120. Due to at least in part to this attenuation, at some frequencies within the passband of the passband RF filter 141, the contribution of the first OMS 110 in the overall modulation response of the EOM 100 may be greater than that of the second OMS 120 by at least 3dB, or by at least 5 dB, or even by 10 dB or greater in some embodiments. At some other frequencies below the passband of the RF filter 151, the contribution of the first OMS 110 in the overall modulation response of the EOM 100 may be smaller than that of the second OMS 120 by at least 3dB, or by at least 5 dB, or even by at least 10 dB in some embodiments. This is schematically illustrated in FIG. 2, where the modulation transfer function 212 of the second OMS 120 only partially overlaps with a higher-frequency modulation transfer function 211 of the first OMS 110, which may be defined at least in part by the passband RF filter 141.

The electrical drive circuit of the EOM 100 may further include an electrical input port 170 for receiving an input data signal 13, and an input RF signal circuit 175 that connects the electrical input port 170 to each of the RF drivers 151 and 152. The RF drivers 151, 152 may be configured to convert the input digital data signal 13 into the RF drive signals for driving the first and second OMS 110, 120. The RF drive signals generated by the first and second RF drivers 151, 152 may thus be traceable to the same input digital data signal 13, and in some embodiments may have a substantially same or similar bandwidth. In some embodiments, at least one of the RF drivers 151, 152 may be linear, in the sense that output signals are linear functions of their input signals. In some embodiment at least one of the RF drivers 151, 152 may be configured to modify the spectrum of the RF drive signal at its output, e.g. to emphasize a high-frequency portion of the signal's spectrum.

In the illustrated embodiment, the second OMS 120 is disposed optically downstream from the first OMS 110, with the second RF driver 152 electrically downstream from the first RF driver 151. The input RF signal circuit 175 may further be configured to provide the input data signal 13 to the second RF driver 152 with a time delay Δt, so as to synchronize the provisioning of the RF drive signals to the consecutive OMS 110, 120 with the propagation of input light 101 along the waveguide 160.

Since a longer RF signal path to the second OMS 120 may result in a relatively greater deterioration of the RF signal strength or quality at high frequencies, it may be advantageous to position the "high-frequency" OMS 110 to be upstream from the "lower-frequency" OMS 120.

By way of example, an OMS may be fabricated in a SOI platform with a silicon waveguide using depletion-mode pin junctions for modulation, a 3dB modulation bandwidth of 65 GHz may correspond to the electrode length of about 1.5 mm or smaller, while a 3dB modulation bandwidth of 45 GHz may correspond to the electrode length of about 2.5 mm or smaller. Accordingly, an example EOM 100 fabricated using a SOI platform with a target modulation bandwidth of 65 GHz may use a 45 to 65 GHz passband filter for the first OMS 110, with the lengths of the first and second OMS 110, 120 of about 1.5 mm or less and about 2.5 mm or less, respectively.

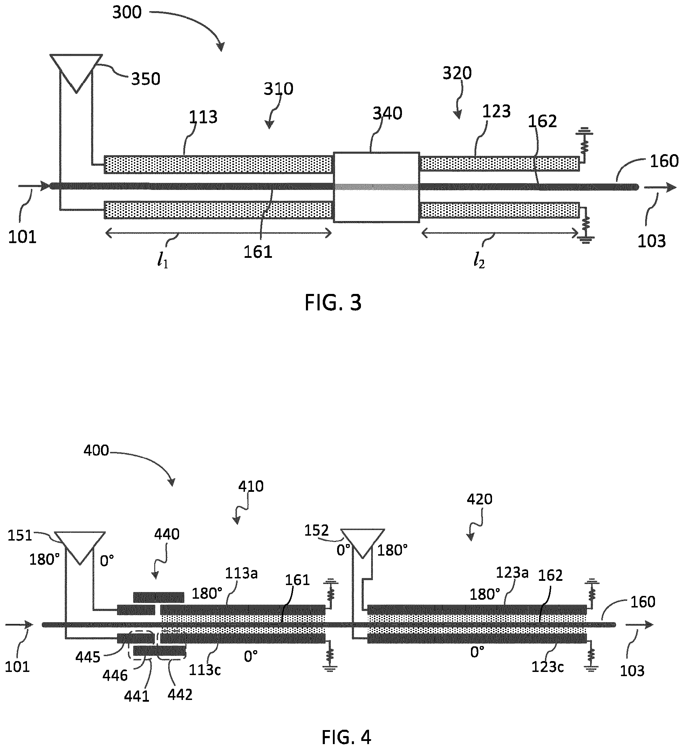

Turning now to FIG. 3, there is illustrated an example EOM 300 having first and second OMS 310, 320 optically connected in series, as described above with reference to FIG. 1. In FIGs. 1 and 3, same or similar elements are labeled with same reference numerals and may not be described here again. The EOM 300 may be viewed as a modification of the EOM 100, in which a passband RF filter 340 is disposed electrically between the first OMS 310 and the second OMS 320, electrically interconnecting their respective drive electrodes 113, 123, which may be properly terminated TW electrodes, i.e., to suppress RF signal reflections. The OMS 310 and 320 both receive the RF drive signals ultimately from a same RF driver 350, which in turn may receive an input electrical digital data signal from an input electrical port of the EOM (not shown). The RF drive signals from the RF driver 350 are delivered to the first, input ends of the paired and substantially parallel electrodes 113 of the first OMS 310, propagate along the paired electrodes 113, and are delivered to the input ends of the paired and substantially parallel electrodes 123 of the second OMS 320 after being filtered by the passband RF filter 340. The RF filter 340 may have a passband at the higher-frequency end of the target modulation frequency band of the EOM 300, e.g. as described above with reference to the RF filter 141. In this embodiment, the second OMS 320 may be shorter than the first OMS 310, *l*₁ > *l*₂. Although the high-frequency components of the RF drive signals may be attenuated by the propagation through the first OMS 310, the second OMS 320 may be configured for efficient high-frequency modulation, for example by using suitably doped lateral p/n junctions as illustrated in FIG. 15. Here, "lateral" refers to the direction, in-plane and relative to the waveguide's length, in which the doping changes from p-type to n-type. By removing or substantially attenuating lower-frequency components of the modulation signal in the RF filter 340, the second OMS 320 may selectively enhance the combined modulation efficiency of the EOM 300 at high frequencies.

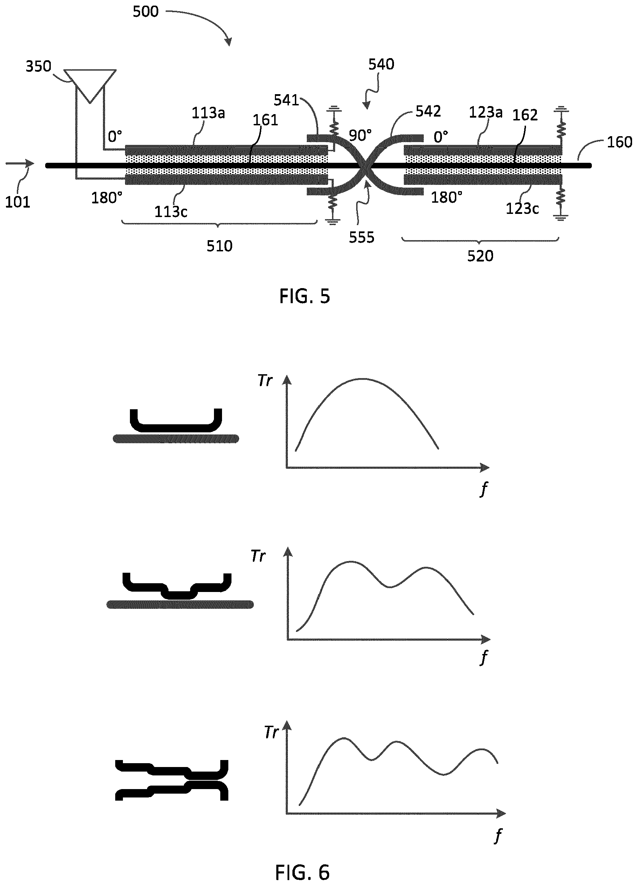

FIGs. 4 and 5 illustrate example embodiments of the EOM 100 and EOM 300, respectively, wherein the passband RF filters 141 and 340 are implemented using directional RF couplers, at 440 and 540 in FIGs. 4 and 5, respectively. Such RF filters may be disposed at least partially upon the same substrate as the OMS. Suitable directional RF filters are known in the art of microwave electronics, and may, e.g., be formed with two TW electrodes having adjacent segments with a small gap therebetween, so that an electromagnetic wave propagating in one of the electrodes can couple into the adjacently extending segment of the other. The spectral position, width and shape of the transmission passbands of such RF filters may be tuned by varying the length of the adjacent segments and the gap therebetween. Examples of a one-segment, two-segment, and three-segment directional RF couplers are illustrated in FIG. 6, with corresponding transmission spectra schematically shown next to each of said RF couplers.

Turning first to FIG. 4, an EOM 400 includes first and second OMS 410, 420 that may be similar to the OMS 110 and 120 described above. In FIG. 4, same or similar elements to those shown in FIG. 1 are labeled with same reference numerals. The passband RF filter 141 of the EOM 100 is implemented using two dual directional RF (DDRF) couplers 440, each including an input electrode segment 445 and a separate coupling electrode segment 446. The input and coupling segments 445, 446 together form a first directional RF coupler 441, and the coupling segments 442 and end segment of electrode 113 a, 113c together form a second, consecutive, directional RF coupler 442. The input segment 445 may be aligned with the corresponding electrode 113. The passband of the DDRF coupler 440 may be tuned e.g. by varying the lengths of the adjacent segments thereof and the gaps therebetween. In the illustrated embodiments the electrodes 113 of the OMS 410 are differentially driven, with two DDRF couplers 440 separately connecting the electrodes 113a, 113c to respective differential ports of the RF driver 151. DDRF couplers 440 may be a part of the first OMS 110, and in some embodiments, may be disposed on the same substrate as the optical waveguide.

An RF signal transmission through each of the directional RF couplers 441, 442 may result in a 90° phase shift thereby providing a 180° phase shift by transmission over the DDRF coupler 440. Accordingly, the first and second RF drivers 151, 152 are typically of opposite polarity, so as to provide RF drive signals to input inputs of electrodes 113 and 123 with about the same phase. For example, in FIG. 4 the electrodes 113a, 123a shown above the optical waveguide 160 may be anode electrodes of the respective first and second OMS, with the electrodes 113c, 123c shown below the optical waveguide 160 may be cathode electrodes of the respective first and second OMS. Since only one of the OMS 410, 420 is coupled to its respective RF driver through a 180° phase-shifting coupler, one of the anode electrodes 113a, 123a may be connected to an inverting output port of the corresponding RF driver 151 or 152, while the other of the anode electrodes 113a, 123a may be connected to the non-inverting output of the other of the two RF drivers. In FIG. 4, the inverting and non-inverting outputs of the RF drivers 151, 152 are labeled "180°" and "0°", respectively.

Turning now to FIG. 5, an EOM 500 may be an embodiment of the EOM 300, and includes first and second OMS 510, 520 that may be similar to the OMS 310 and 320 described above. In FIG. 5, same or similar elements to those shown in FIGs. 1, 3, and 4 are labeled with same reference numerals. The passband RF filter 304 of the EOM 300 is implemented using two coupling segments 541 and 542, which form two DDRF couplers 540 that couple output ends of the electrodes 113 of the first OMS 510 to input ends of the electrodes 123 of the second OMS 520. Since each of the DDRF coupler 540 inverts the phase of the RF signal transmitted therethrough by 180° degrees, the coupling segments 541, 542 may be disposed with a cross-over 555. E.g. the DDRF couplers 540 may couple the anode and cathode electrodes 113a, 113c of the first OMS 510 to, respectively, the cathode and anode electrodes 123c, 123a of the second OMS 520.

FIGs. 1, 3 - 5 show example EOMs 100, 300, 400 and 500 having a pair of electrodes in each OMS that are differentially driven, generally in counter-phase. In other embodiments one of the electrodes in each OMS may be connected to a ground, or a source of a DC voltage, with the RF driver providing an RF drive signal to the other electrode.

Furthermore, each of the EOMs 100, 300, 400 and 500 described above may include more than two OMSs, with at least one of the additional OMSs configured for modulating light in a different spectral region or sub-band, e.g. to further extend the cumulative modulation bandwidth of the EOM.

Furthermore FIGs. 1, 3 - 5 show example EOMs 100, 300, 400 and 500 with a single optical waveguide 160 extending therethrough. Two instances of such EOMs may be connected between an optical splitter and an optical combiner to form a segmented MZM, which may be differentially or dual-differentially driven to implement a push-pull modulation.

In some embodiment, the optical waveguide 160 of the EOMs 100, 300, 400 and 500 may represent segments of two waveguide arms of a Mach-Zehnder interferometer (MZI). Each of these waveguide arms may be electro-optically coupled to a different electrode 113 or 123 to form a segmented MZM, which may be push-pull modulated by one or more differential RF drivers. In such MZM, each of the first and second OMS corresponds to a different MZM segment.

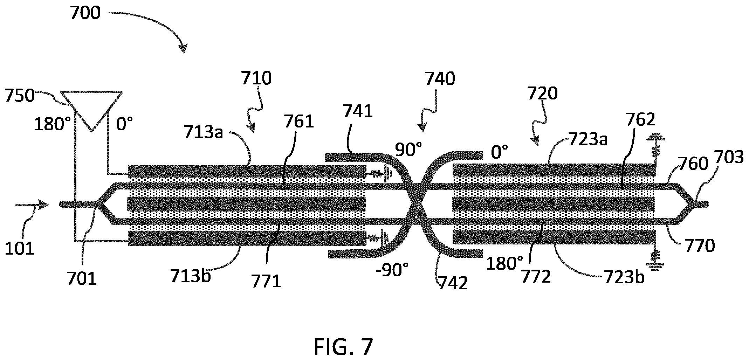

FIG. 7 schematically illustrates an EOM 700 in the form of a segmented MZM having first and second OMS 710, 720 optically connected in series and commonly driven by a differential RF driver 750. The EOM 700 may be referred to herein as the MZM 700. The optical waveguides 760, 770 are connected between an input optical splitter 701 and an output optical combiner 703 to form two waveguide arms of the MZM 700. The first OMS 710 includes electrodes 713a and 713b that extend adjacent to respective first segments 761, 771 of the first and second waveguide arms 760 and 770, respectively. The second OMS 720 includes electrodes 723a and 723b that extend adjacent to respective second segments 762, 772 of the first and second waveguide arms 760 and 770, respectively.

The electrodes 713, 723 are operatively coupled to the corresponding adjacent segments of the optical waveguides 760, 770 for modulating light propagating therein, with electrodes 713a and 723a coupled to the optical waveguide 760, and electrodes 713b and 723b coupled to the optical waveguide 770. In some embodiments, the waveguide segments 761, 762, 771, 772 may include pin junctions extending or distributed along the segment's length, or at least a portion thereof. In some embodiments, each OMS 710, 720 may include semiconductor material that is, for example, p-doped between the laterally adjacent segments of the waveguide arms 770 and 760, and n-doped between the waveguide segments and the adjacent electrode 713 or 723 with pin junction(s) between the laterally adjacent p-type and n-type doped region. Alternately, n-doped region(s) may be between the laterally adjacent segments of the waveguide arms 770 and 760, and p-doped region(s) may be between the waveguide segments and the adjacent electrodes. In some embodiments, each OMS may include a third electrode disposed between the optical waveguides, which may be connected to ground or a DC bias voltage source. It will be appreciated that other embodiments may have different electrode configurations in each OMS, for example with a signal electrode between the waveguides in one or both modulator segments.

Similarly to the EOMs 300 and 500 described above, the two OMS 710 and 720 are commonly driven by a differential RF driver 750, which may be an embodiment of the differential RF driver 350. The differential RF driver 750 may receive an input digital data signal from an input electrical port of the EOM (not shown). The differential RF drive signals from the RF driver 750 are delivered to the first, input ends of the electrodes 713 of the first OMS 710, propagate along the electrodes 713, and are then transmitted to the input ends of the electrodes 723 of the second OMS 720 through two DDRF couplers 740, which may be formed using RF coupling waveguide segments 741 and 742, generally as described above with reference to FIG. 5 and DDRF couplers 540. Since each of the DDRF couplers 740 inverts the phase of the (single-ended) RF signal transmitted therethrough by about 180° degrees, the coupling segments 741, 742 may be disposed with a cross-over, to cross-couple output ends of the electrodes 713a, 713b of the first OMS 710 to input ends of the electrodes 723b, 723a, respectively, of the second OMS 720. As a result, the push-pull modulation of light propagating through the OMS 710 and 720 may be phase-synchronized and generally in-phase relative to the propagation of light along the MZM arms. The lengths of the coupling segments 741, 742 may be adjusted to synchronize the propagation of light through the MZM 700 with the propagation of the RF drive signal in the OMSs. Similarly to the EOM 300 and 500, in some embodiments the electrodes 723 of the second OMS 720 may be shorter than the electrodes 713 of the second OMS 710. In some embodiments, the pin junctions in the optical waveguide segments 762, 772 of the second OMS 720 may differ from the pin junctions in the optical waveguide segments 761, 771 of the first OMS 710, for example to facilitate the modulation of light at higher frequencies. The differences may include differences in doping concentrations in the respective pin junctions and/or the geometry of the pin junctions. For example, in some embodiments the optical waveguide segments 762, 772 of the second OMS 720 may have lateral pin junctions, as schematically illustrated in FIG. 15, while the optical waveguide segments 761, 771 of the first OMS 710 may have interdigitated pin junctions, as schematically illustrated in FIG. 16.

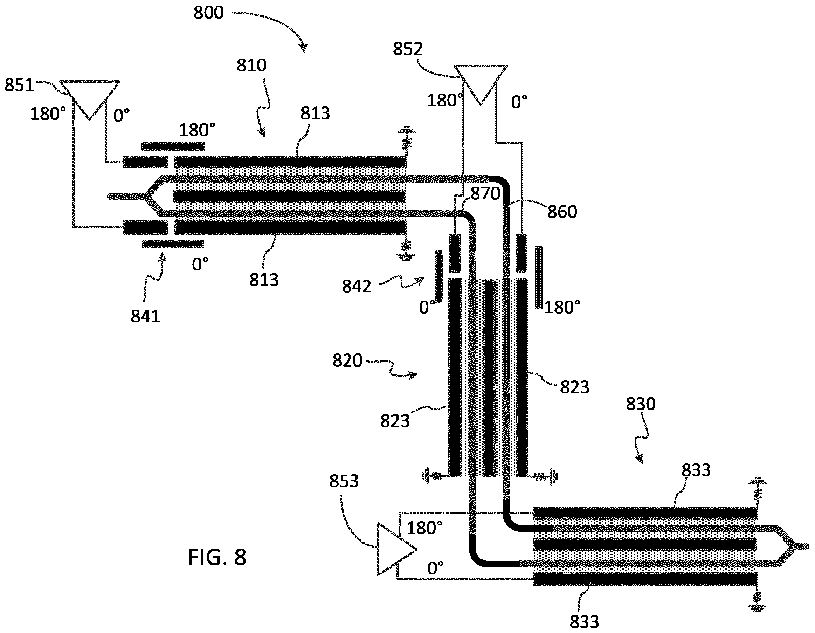

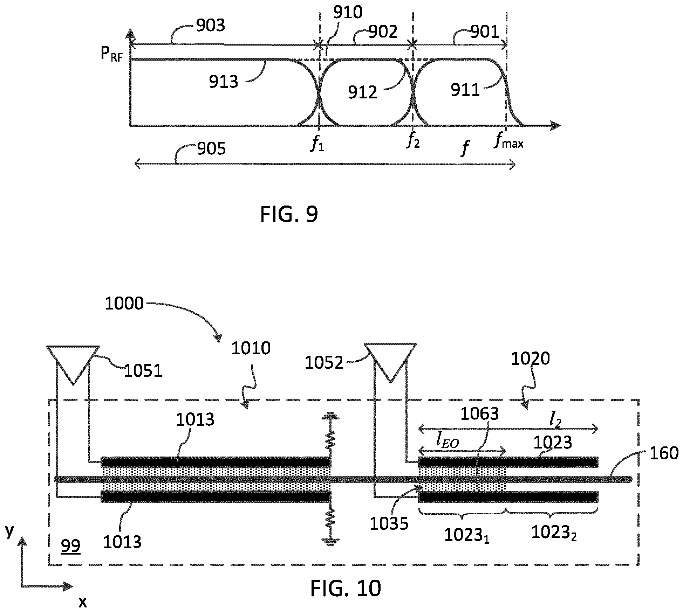

FIG. 8 schematically illustrates an example EOM 800 embodied as a segmented MZM having three OMSs 810, 820, and 830 that are optically connected in series and individually driven by differential RF drivers 851, 852, and 853, respectively. The OMSs 810 and 820 are connected to corresponding RF drivers 851, and 852 through respective passband RF filters 841 and 842 formed with DDRF couplers. The passband RF filters 841 and 842 may be viewed as parts of the respective OMSs 810 and 820, and may be configured for modulating predominately in two distinct modulation sub-bands 901 and 902 (FIG. 9), corresponding to the passbands of the RF filter 841 and 842, respectively.

The third OMS 830 may be connected to the corresponding RF driver 853 without directional RF couplers therebetween, and configured for modulation in the lower-frequency sub-band 903. In some embodiments the RF driver 853 may be AC-coupled to the electrodes 833 of the OMS 830, e.g. by means of a high-pass filter having a cut-off frequency *f*ₘᵢₙ that defines a low-frequency edge of the modulator's bandwidth BWₜₒₜₐₗ. The frequency *f*ₘᵢₙ is smaller than the lower-frequency cut-offs *f*₁ and *f*₂ of the passband filters 841 and 842, e.g. at least 10 times, or 100 times smaller, or at least 1000 times smaller. By way of example, *f*ₘᵢₙ may be smaller than 1 MHz, and *f*₁ may be greater than 1 GHz. The OMSs 810, 820, and 830 and their respective RF drivers and passband filters may be configured to provide a cumulative spectral response 910 of the EOM, which may be composed of their respective modulation responses 911, 912, and 913, and have a total bandwidth 905 that exceeds the modulation bandwidth of each individual OMS.

Example embodiments of the segmented EOMs described above may be composed of TW-OMSs that include TW electrodes in each modulator segment, wherein some or all of the TW electrodes may be suitably terminated to eliminate, or at least suppress, RF back reflections from the electrodes' ends. In some embodiments, one or more RF-resonant modulator segments, or OMSs, may be provided, which utilize RF resonator(s) to modulate light propagating in adjacent optical waveguide segments at frequencies near a selected RF resonance frequency *f*ᵣ. Such RF resonators may be for example in the form of a non-terminated electrode segment, termed resonant-stub electrode, that is configured to operate as a standing-wave RF resonator with the RF resonance frequency *f*ᵣ selected within the modulation frequency bandwidth of the EOM. An electric length of such a resonant-stub electrode may be about equal to λᵣ/4, where λᵣ is the wavelength of an RF signal of the resonance frequency *f*ᵣ propagating in the segment. Embodiments with resonant electrodes having the electric length equal to about an integer multiple of λᵣ/4 may also be envisioned.

When driven by a broad-band RF signal, a resonant-stub electrode may accumulate more energy, in a standing wave at RF frequencies near *f*ᵣ, than at significantly lower or higher frequencies, e.g *f* < *f*ᵣ*-*Δ*f* and *f* > *f*ᵣ+Δ*f*, and thus may operate effectively as a passband RF filter with a passband of width ~ 2Δ*ƒ* centered at the resonant frequency *f*ᵣ. Here, 2Δf may be the FWHM (full width at half maximum) width of the RF spectral response of the resonant electrode, which depends on the Q-factor thereof. An RF-resonant OMS that employs one or more resonant-stub electrodes may be configured to selectively modulate light in a specific sub-band of the modulation spectral band of the EOM, e.g. at the high-frequency end of the EOM bandwidth.

Since a resonant-stub electrode accumulates the RF energy in a standing wave, an RF-resonant OMS using such electrodes may be configured to have an electro-optic interaction length *l*_{EO} smaller than the length of the resonant stub electrode(s), which may lessen undesirable effects of the velocity mismatch between the standing RF wave and the traveling optical signal upon the modulation efficiency of the RF-resonant OMS.

FIG. 10 illustrates an example multi-segment EOM 1000 that includes a first OMS 1010 and a second OMS 1020 optically connected in series, with at least one optical waveguide 160 extending through the two OMS. The EOM 1000 may be an embodiment of the EOM 400, in which one of the OMSs employs resonant-stub electrodes instead of DDRF couplers to provide modulation frequency selectivity. In the illustrated embodiment, the first OMS 1010 may be a TW-OMS that includes a pair of TW electrodes 1013 extending adjacent to a first segment or segments of the at least one optical waveguide 160. The second OMS 1020 is an RF-resonant OMS that includes a pair of resonant-stub electrodes 1023 extending adjacent to a second segment or segments of the at least one optical waveguide 160. As illustrated, the OMS 1020 is positioned optically downstream of the OMS 1010. In some embodiments, the positions of the OMS 1020 and OMS 1010 may be switched, so that the resonant OMS 1020 is optically upstream of the TW OMS 1010. The TW electrodes 1013 may be longer than the resonant-stub electrodes 1023. The TW electrodes 1013 may have a 3dB transmission response roll-off at a first RF frequency *f*₁, and the resonant-stub electrodes 1023 may be configured to resonate at the resonant frequency *f*ᵣ ≥ *f*₁, so as to extend the overall modulation band of the EOM 1000 to frequencies beyond *f*₁*.*

By way of example, *f*₁ may be in the 20 to 40 GHz range, and *fᵣ* may be in the 25 to 50 GHz range, or *f*₁ may be in the 40 to 50 GHz range, and *fᵣ* may be in the 50 to 75 GHz range. Further by way of example, for a SOI-based EOM employing silicon-channel optical waveguide(s) with pin junctions, the length *l*₂ of the resonant-stub electrode 1023 may be in the range from about 500 microns to about 330 microns, corresponding to the *fᵣ* in the range from 50G to 75 GHz.

In embodiments with modulating pin junctions, the EO interaction length *l_{EO}* is the length of an electrode-adjacent segment 1063 of the optical waveguide 160 with the pin junction present, the corresponding segment termed the EO modulating segment. In FIG. 10, the shaded areas between the electrodes schematically indicate the p-doped and n-doped regions for an example embodiment, similarly to FIGs. 1, 4, 5, 8, and 11. Segments 1023₁ of the electrodes 1023 extending along the EO modulating segment 1063, and being in electrical contact with the p-doped and n-doped regions along their length, may be referred to as active, or pin junction loaded, electrode segments. Segments 1023₂ of the electrodes 1023 in the un-doped regions may be referred to as passive, or unloaded electrode segments. The OMS 1020 also includes a non-modulating segment of the optical waveguide 160 lacking the pin junctions.

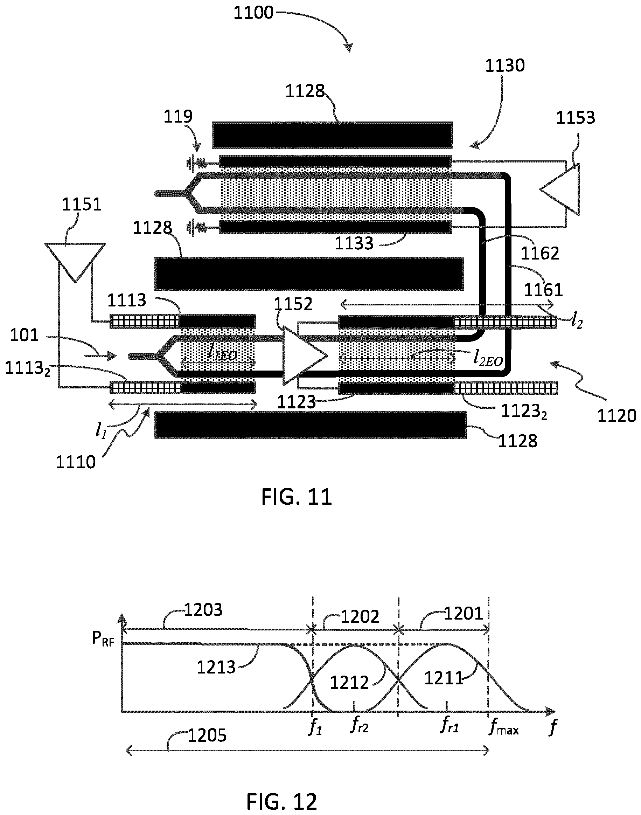

FIG. 11 illustrates a multi-segment EOM 1100 embodied as a segmented MZM having a TW-OMS 1130 and two RF-resonant OMSs, OMS 1120, and OMS 1110. The EOM 1100 may be an embodiment of the EOM 1000 with an added second resonant OMS and the at least one optical waveguide 160 replaced with two optical waveguides 1161, 1162 connected in parallel to form two waveguide arms of an MZI. The EOM 1100 may also be an embodiment of the EOM 800 using resonant-stub electrodes instead of DDRF couplers in two OMSs to support modulation within distinct sub-bands. The OMS 1110, 1120, and 1130 may be electrically connected to corresponding RF drivers 1151, 1152, and 1153, respectively, with or without directional RF couplers therebetween, and in operation may receive the RF drive signals having substantially same frequency content or somewhat different frequency content. The RF drivers 1151, 1152, and 1153 may be configured to provide differential RF signals to the electrode pairs of the OMS 1110, 1120, and 1130 to implement a push-pull modulation of input light 101.

The TW-OMS 1130 may include suitably terminated TW electrodes 1133, and may be configured to modulate input light 101 in a low-frequency sub-band or segment 1203 of a target modulation band (*f*ₘᵢₙ, *f*ₘₐₓ) 1205 of the EOM (FIG. 12), e.g. at RF frequencies about or smaller than a first frequency *f*₁. The first frequency *f*₁, which may be smaller than *f*ₘₐₓ, may correspond to a 3-dB roll-off of the RF frequency response of the TW electrodes 1133, which is schematically illustrated in FIG. 12 at 1213.

The second OMS 1120 may be an RF-resonant OMS, with the electrodes 1123 configured to exhibit an RF resonance at an RF frequency *f*_{*r*2} > *f*₁, to modulate input light 101 in a mid-frequency sub-band 1202 (FIG. 12) of the target modulation band 1205; the RF frequency response associated with the resonant electrodes 1123 of the second OMS 1120 is schematically indicated at 1212 in FIG. 12. The OMS 1120 may be configured to operate as a "passband element" for RF drive signals at the resonant frequency *f*_{*r*2}*.* The EO interaction length *l*_{2*EO*} in the OMS 1120 may be smaller than the length *l*₂ of the electrodes 1123, i.e. to lessen the effect of the EO velocity mismatch as described above with reference to FIG. 10. In some embodiments, the EO interaction length *l_{2EO}* in the OMS 1120 may be about half of the electrode length *l*₂ or smaller, *l*_{2*EO*} ≤ 0.5 . *l*₂. The EO interaction length *l*_{2*EO*} in the OMS 1120 may thus be about 1/8^{th} of the wavelength of the resonant RF wave in the electrode, or less, and the OMS 1120 may act substantially as a lumped EO element, although the electrodes 1123 are not lumped. The electrodes 1123 may each include a passive segment 1123₂ of length (*l₂* - *l_{2EO}*) that is not coupled, or only weakly coupled, to any of the optical waveguides 1161, 1162. In some embodiments the passive segment 1123₂ of each electrode 1123 is at least half of the electrode in length.

The first OMS 1110 may also be an RF-resonant OMS, with the electrodes 1113 configured to exhibit an RF resonance at an RF frequency *f*_{*r*1} > *f*_{*r*2}, to modulate input light 101 in a high-frequency segment 1201 of the target modulation band 1205; the RF frequency response associated with the resonant electrodes 1113 of the first OMS 1110 is schematically indicated at 1211 in FIG. 12. The OMS 1110 may be configured to operate as a "passband element" for RF drive signals near the resonant frequency *f*_{*r*1}, with an EO interaction length *l*_{2*EO*} in the OMS smaller than the length *l₁* of the electrodes 1113. In some embodiments, the EO interaction length *l*_{1*EO*} in the OMS 1110 may be about half of the electrode length *l*₁ or smaller, *l*_{2*EO*} ≤ 0.5 /₁. The electrodes 1113 may each include a passive segment 1113₂ of length (*l*₁ - *l*_{1*EO*}) that is not coupled, or only weakly coupled, to any of the optical waveguides 1161, 1162. In some embodiments the passive segment 1113₂ of each electrode 1113 is at least half of the electrode in length.

The passive electrode segments 1113₂ and 1123₂ may be rendered "passive", i.e. electro-optically decoupled from the optical waveguides 1161 and 1162, by being disposed substantially away from the corresponding optical waveguides, and/or in a region lacking modulating pin junctions. FIG. 11 illustrates an example embodiment wherein the active electrode segments are disposed in the p-doped or n-doped contact regions of the modulating pin junctions. The p-doped and n-doped contact regions of the modulating pin junctions are shown by the shaded areas between the electrodes, extending through the optical waveguides 1161 and 1162 to indicate the EO-modulating segments thereof.

In some embodiments of the example multi-segment EOMs described above, the RF drivers associated with different OMSs may be a part of an RF driving circuit that is configured to receive input digital data signal and distribute it to the RF drivers of the respective OMS, preferably in synchronization with the propagation of light therein, e.g. as illustrated in FIG. 1. The input digital data signal may contain a range of RF frequencies distributed in a signal frequency band of a width that may depend on the symbol rate chosen for modulation. According to an aspect of the present disclosure, the RF drive signals provided to different OMSs modulate a same data value onto the optical carrier in a same symbol period, with different OMSs of a same multi-segment EOM configured to modulate the optical carrier in different frequency regions of the signal frequency band, which may be at least partially non-overlapping as described above. In some embodiments, an OMS configured to operate at relatively higher RF drive frequencies may be disposed optically upstream of another OMS configured to operate at relatively lower RF drive frequencies, e.g. as illustrated in FIGs. 1, 4, 8, and 11; in other embodiments the order in which higher RF drive frequency and lower RF drive frequency OMSs are disposed along the optical path in the EOM may be different.

Embodiments in which one or more higher RF drive frequency OMSs is/are disposed optically upstream of one or more lower RF drive frequency OMSs may have an advantage of shorter transmission distances for higher RF drive frequencies, which may be more susceptible to transmission related deterioration. In some embodiments, the modulating segments of the optical waveguide(s) in different OMSs may be configured differently, depending on the target frequency sub-band of the particular OMS. For example, in some embodiments an OMS configured for a comparatively higher RF drive frequency sub-band may employ lateral pin junctions, while an OMS configured for a comparatively lower RF drive frequency sub-band may employ interdigitated pin junctions, or vice versa. In some embodiments, the pin junctions of a lower RF drive frequency OMS may have different doping levels than the pin junctions of a higher RF drive frequency OMS.

Each of the example EOMs 100, 300, 400, 500, 800, 1000, and 1100 described above may be embodied using one or more chips. In some embodiments, the optical waveguides and the electrodes coupled thereto in various modulator segments may be located in a photonic chip along a planar surface of a substrate, such as substrate 99 illustrated in FIGs. 1 and 10. The photonic chip may be for example a silicon photonic (SiP) chip, for which various optical waveguides are silicon waveguides, e.g., ridge waveguides. In some embodiments, the RF driving circuit may be at least partially incorporated in a second chip, such as an RF integrated circuit (IC) chip, which may be flip-chip bonded to the photonic chip to provide electrical contacts to the RF drive electrodes and/or RF filter(s) in the OMSs of the EOM.

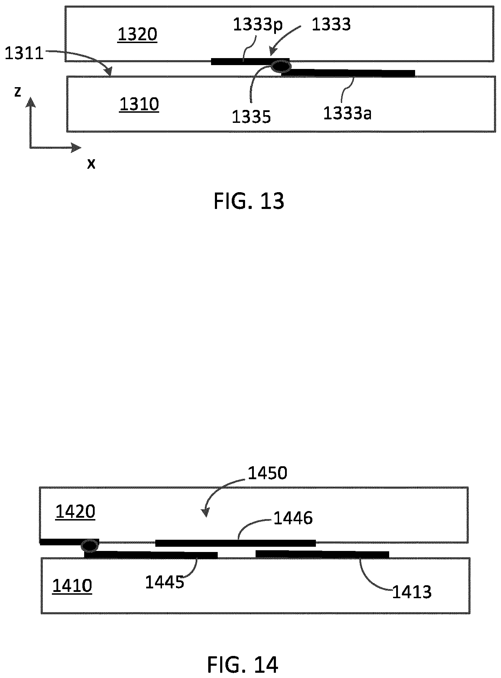

In some embodiments, the IC chip may include "passive" parts of the EOM's electrodes whose RF waves are not intended to directly contribute to the modulation of light. For example, in some embodiments with RF-resonant OMSs, active segments of the resonant electrodes may be disposed in a photonic chip, while the passive segments thereof may be at least partially disposed in the second, RF IC chip. This is schematically illustrated in FIG. 13, showing an RF IC chip 1320 that is flip-chip bonded to a phonic chip 1310. A resonant-stub electrode 1333 of an OMS has an active segment that extends along a planar surface 1311 of the photonic chip's substrate adjacent to an optical waveguide (not shown). A passive segment 1333p of the resonant-stub electrode 1333 is disposed upon a surface of the IC chip 1320 facing the photonic chip, and is electrically connected to the active segment 1333a, e.g. with a metallic solder "bump" bond 1335. The resonant electrode 1333 may represent any of the electrodes 1023, 1113, 1123 of the multi-segment EOMs 1000 and 1100 illustrated in FIGs. 10 and 11.

In some embodiments, the RF IC chip may also include the passband RF filters as described above, or some parts thereof. One possible configuration is illustrated in FIG. 14, showing an RF IC chip 1420 that is flip-chip bonded to a phonic chip 1410. A DDRF coupler 1450 includes an input electrode segment 1445, which may be connected to an RF driver on the IC chip by e.g. a metallic solder "bump" bond. An end segment of the input electrode 1445 is electro-magnetically coupled to a first end of a coupling electrode 1446, which is disposed upon a surface of the RF IC chip 1420 facing the photonic chip 1410, forming a first directional RF coupler therewith. The second end of the coupling electrode 1446 is electro-magnetically coupled to an input end of a modulating electrode 1413, which is disposed upon a surface of the photonic chip 1410 and extends adjacent to an optical waveguide (not shown). The DDRF coupler 1450 may represent any of the DDRF couplers 440, 540, 740, 841, 842 of the multi-segment EOMs illustrated in FIGs. 4, 5, 7, and 8.

The examples of multi-segment EOMs described above are not intended to be limiting, and many variations will become apparent to a skilled reader having the benefit of the present disclosure. For example, various features described above with reference to a specific embodiment or embodiments may be combined with other embodiments. For example, a same multi-segment EOM may combine one or more OMS incorporating passband RF filters with one or more other OMSs incorporating resonant electrodes. By way of example, the passband-driven OMS 810 of EOM 800 of FIG. 8 may be replaced with the RF-resonant OMS 1110 of the EOM 1100 of FIG. 11. Furthermore, additional TW OMS, passband-driven OMS, or RF-resonant OMS may be added to any of the multi-segment EOMs described above. Furthermore, in any of the described examples and their variations, different OMSs may provide distinct contributions into the EOM modulation spectrum that are substantially non-overlapping in some frequency regions thereof, while modulating a same data value onto the optical carrier in a same symbol period. Furthermore, in any of the described examples and their variations, a higher-frequency OMS may be shorter, or have a smaller EO interaction length, than a lower-frequency OMS, or may be of a substantially the same length.

Furthermore, passband RF filters other than DDRF couplers may be used in various embodiments of the multi-segment EOM in according with the present disclosure such as for example a passband RF filter in the form of a rat-race coupler.

Furthermore, multi-segment EOMs such as those described above may be implemented in material systems other than those based on silicon, and may use electro-optical effects other than those based on free carrier injection or depletion. Non-limiting example of materials and material systems that may be used to implement one or more modulator segments of an EOM include photonic-crystals, integrated graphene layers, various compound semiconductor materials such as those of the III-V group, or thin-film LiNbO3 integrated on a suitable, e.g. silicon, substrate.

Furthermore in the description above, for purposes of explanation and not limitation, specific details are set forth such as particular architectures, interfaces, techniques, etc. in order to provide a thorough understanding of the present invention. In some instances, detailed descriptions of well-known devices, circuits, and methods are omitted so as not to obscure the description of the present invention with unnecessary detail. Thus, for example, it will be appreciated by those skilled in the art that block diagrams herein can represent conceptual views of illustrative circuitry embodying the principles of the technology.

Thus, while the present invention has been particularly shown and described with reference to example embodiments as illustrated in the drawing, it will be understood by one skilled in the art that various changes in detail may be affected therein without departing from the scope of the invention as defined by the claims

## Claims

1. An apparatus comprising:
a segmented optical modulator (100, 300, 400, 500, 700, 800, 1000, 1100), the segmented optical modulator comprising:
an optical waveguide (160) along a planar surface (1311) of a substrate (99);
a plurality of electrodes (113, 123) disposed along the planar surface of the substrate, the plurality of electrodes comprising:
one or more first electrodes (113) located along a first segment (161) of the optical waveguide to form a first modulator segment (110) therewith;
one or more second electrodes (123) located along a second segment (162) of the optical waveguide to form a second modulator segment (120) therewith; and,
an electrical drive circuit (151, 152) configured to transmit RF drive signals to both the first and second electrodes (113, 123) to modulate an optical carrier (101) propagating along the optical waveguide;
wherein the segmented optical modulator is configured so that the second modulator segment (120) is optically connected in series with the first modulator segment (110) and **characterized in that** the first and second modulator segments (110, 120) modulate the optical carrier in distinct frequency regions (201, 202), wherein a spectral response (211, 212) of the first modulator segment and a spectral response (211, 212) of the second modulator segment are at least partially non-overlapping in the distinct frequency regions.

2. The apparatus of claim 1 wherein the electrical drive circuit (151, 152) is configured to provide the RF drive signals to both the first and second electrodes (113, 123) to modulate a same data value onto the optical carrier (101) in a same symbol period.

3. The apparatus of claim 2 wherein the one or more first electrodes (113) have a different length than the one or more second electrodes (123).

4. The apparatus of any one of claims 1, 2 or 3 wherein the plurality of electrodes comprises a passband RF filter (141; 340) located in a signal path from the electrical drive circuit (151, 152) to the electrodes (113, 123) of the first or second modulator segment (110, 120).

5. The apparatus of claim 4 wherein the passband RF filter (141, 340) comprises at least one directional RF coupler (440, 540).

6. The apparatus of claim 5 wherein the at least one directional RF coupler (440, 540) comprises at least one dual directional RF coupler.

7. The apparatus of claim 5 wherein the at least one directional RF coupler (440, 540) includes an end segment of one of the first or second electrodes (113, 123).

8. The apparatus of any one of the claims 4 to 7 wherein the passband RF filter (340) is electrically connected between the first and second modulator segments (310, 320).

9. The apparatus of claim 8 wherein the first and second modulator segments (510, 520) comprise, respectively, two first electrodes (113a, 113c) and two second electrodes (123a, 123c), and wherein the passband RF filter (540) comprises first and second dual directional RF couplers (541, 542) connecting output ends of the two first electrodes to input ends of the two second electrodes, wherein the first and second dual directional RF couplers cross between the first and second electrodes (113, 123).

10. The apparatus of any one of the claims 4 to 9 wherein the passband RF filter (141, 340) has a passband extending beyond a 3 dB modulation bandwidth of the second modulator segment (110, 120).

11. The apparatus of any one of claims 1, 2 or 3 wherein the one or more first electrodes (123) comprise one or more resonant stub electrodes (1023) having a resonance at an RF drive frequency of the electrical drive circuit (151, 152).

12. The apparatus of claim 11 wherein the one or more second electrodes (113) are configured to operate as travelling wave electrodes (1013) for RF drive signals of the electrical drive circuit (151, 152).

13. The apparatus of any one of claims 11 or 12, wherein the first segment (162) of the optical waveguide comprises a modulating segment (1063) and a non-modulating segment, wherein the modulating segment has a length of at most one half of one of the resonant stub electrodes (1023).

14. The apparatus of any one of claims 11, 12, or 13 wherein the resonant-stub electrode (1113; 1123) comprises a segment (1113₂; 1123₂) extending away from the optical waveguide (160).

15. The apparatus of any one of claims 11 to 14 wherein the plurality of electrodes further comprises one or more third electrodes (813, 823, 833) located along a third segment of the optical waveguide to form a third modulator segment (810, 820, 830) therewith, comprising a passband RF filter (841, 842) disposed in a signal path from the electrical drive circuit (851, 852, 853) to the one or more third electrodes, wherein the one or more third electrodes are configured as travelling-wave electrodes for those of the RF drive signals provided thereto.

## Patentansprüche

1. Vorrichtung, die Folgendes umfasst:
einen segmentierten optischen Modulator (100, 300, 400, 500, 700, 800, 1000, 1100), wobei der segmentierte optische Modulator Folgendes umfasst:
einen optischen Wellenleiter (160) entlang einer planaren Fläche (1311) eines Substrats (99);
eine Vielzahl von Elektroden (113, 123), die entlang der planaren Fläche des Substrats angeordnet sind, wobei die Vielzahl von Elektroden Folgendes umfassen:
eine oder mehrere erste Elektroden (113), die sich entlang eines ersten Segments (161) des optischen Wellenleiters befinden, um ein erstes Modulatorsegment (110) damit zu bilden;
eine oder mehrere zweite Elektroden (123), die sich entlang eines zweiten Segments (162) des optischen Wellenleiters befinden, um ein zweites Modulatorsegment (120) damit zu bilden; und,
eine elektrische Ansteuerschaltung (151, 152), die dazu ausgelegt ist, sowohl zu den ersten als auch zu den zweiten Elektroden (113, 123) RF-Ansteuersignale zu übertragen, um einen optischen Träger (101) zu modulieren, der sich entlang des optischen Wellenleiters ausbreitet;
wobei der segmentierte optische Modulator derart ausgelegt ist, dass das zweite Modulatorsegment (120) mit dem ersten Modulatorsegment (110) optisch in Reihe verbunden ist, und **dadurch gekennzeichnet, dass** das erste und das zweite Modulatorsegment (110, 120) den optischen Träger in verschiedenen Frequenzbereichen (201, 202) modulieren, wobei sich eine spektrale Empfindlichkeit (211, 212) des ersten Modulatorsegments und eine spektrale Empfindlichkeit (211, 212) des zweiten Modulatorsegments in den verschiedenen Frequenzbereichen mindestens teilweise nicht überlappen.

2. Vorrichtung nach Anspruch 1, wobei die elektrische Ansteuerschaltung (151, 152) dazu ausgelegt ist, die RF-Ansteuersignale sowohl den ersten als auch den zweiten Elektroden (113, 123) bereitzustellen, um in einer selben Symbolperiode einen selben Datenwert auf den optischen Träger (101) zu modulieren.

3. Vorrichtung nach Anspruch 2, wobei die eine oder die mehreren ersten Elektroden (113) eine andere Länge aufweisen als die eine oder die mehreren zweiten Elektroden (123).

4. Vorrichtung nach einem der Ansprüche 1, 2 oder 3, wobei die Vielzahl von Elektroden ein Passband-RF-Filter (141; 340) umfasst, das sich in einem Signalpfad von der elektrischen Ansteuerschaltung (151, 152) zu den Elektroden (113, 123) des ersten oder des zweiten Modulatorsegments (110, 120) befindet.

5. Vorrichtung nach Anspruch 4, wobei das Passband-RF-Filter (141, 340) mindestens einen gerichteten RF-Koppler (440, 540) umfasst.

6. Vorrichtung nach Anspruch 5, wobei der mindestens eine gerichtete RF-Koppler (440, 540) mindestens einen dualen gerichteten RF-Koppler umfasst.

7. Vorrichtung nach Anspruch 5, wobei der mindestens eine gerichtete RF-Koppler (440, 540) ein Endsegment von einer der ersten oder der zweiten Elektroden (113, 123) beinhaltet.

8. Vorrichtung nach einem der Ansprüche 4 bis 7, wobei das Passband-RF-Filter (340) zwischen dem ersten und dem zweiten Modulatorsegment (310, 320) elektrisch verbunden ist.

9. Vorrichtung nach Anspruch 8, wobei das erste und das zweite Modulatorsegment (510, 520) jeweils zwei erste Elektroden (113a, 113c) und zwei zweite Elektroden (123a, 123c) umfassen und wobei das Passband-RF-Filter (540) einen ersten und einen zweiten dualen gerichteten RF-Koppler (541, 542) umfasst, die Ausgangsenden der zwei ersten Elektroden mit Eingangsenden der zwei zweiten Elektroden verbinden, wobei sich der erste und der zweite duale gerichtete RF-Koppler zwischen den ersten und den zweiten Elektroden (113, 123) kreuzen.

10. Vorrichtung nach einem der Ansprüche 4 bis 9, wobei das Passband-RF-Filter (141, 340) ein Passband aufweist, das sich über eine 3-dB-Modulationsbandbreite des zweiten Modulatorsegments (110, 120) erstreckt.

11. Vorrichtung nach einem der Ansprüche 1, 2 oder 3, wobei die eine oder die mehreren ersten Elektroden (123) eine oder mehrere Resonanzstichleitungelektroden (1023) umfassen, die bei einer RF-Ansteuerfrequenz der elektrischen Ansteuerschaltung (151, 152) eine Resonanz aufweisen.

12. Vorrichtung nach Anspruch 11, wobei die eine oder die mehreren zweiten Elektroden (113) dazu ausgelegt sind, als Wanderwellenelektroden (1013) für RF-Ansteuersignale der elektrischen Ansteuerschaltung (151, 152) betrieben zu werden.

13. Vorrichtung nach einem der Ansprüche 11 oder 12, wobei das erste Segment (162) des optischen Wellenleiters ein modulierendes Segment (1063) und ein nicht modulierendes Segment umfasst, wobei das modulierende Segment mit einer Länge von höchstens einer Hälfte von einer der Resonanzstichleitungelektroden (1023) aufweist.

14. Vorrichtung nach einem der Ansprüche 11, 12 oder 13, wobei die Resonanzstichleitungelektrode (1113; 1123) ein Segment (1113₂; 1123₂) umfasst, das sich vom optischen Wellenleiter (160) weg erstreckt.

15. Vorrichtung nach einem der Ansprüche 11 bis 14, wobei die Vielzahl von Elektroden ferner eine oder mehrere dritte Elektroden (813, 823, 833) umfasst, die sich entlang eines dritten Segments des optischen Wellenleiters befinden, um ein drittes Modulatorsegment (810, 820, 830) damit zu bilden, das ein Passband-RF-Filter (841, 842) umfasst, das in einem Signalpfad von der elektrischen Ansteuerschaltung (851, 852, 853) zu der einen oder den mehreren dritten Elektroden angeordnet ist, wobei die eine oder die mehreren dritten Elektroden als Wanderwellenelektroden für diejenigen der RF-Ansteuersignale ausgelegt sind, die denselben bereitgestellt sind.

## Revendications

1. Appareil comprenant :
un modulateur optique segmenté (100, 300, 400, 500, 700, 800, 1000, 1100), le modulateur optique segmenté comprenant :
un guide d'ondes optiques (160) le long d'une surface plane (1311) d'un substrat (99) ;
une pluralité d'électrodes (113, 123) disposées le long de la surface plane du substrat, la pluralité d'électrodes comprenant :
une ou plusieurs premières électrodes (113) situées le long d'un premier segment (161) du guide d'ondes optiques pour former un premier segment modulateur (110) avec celui-ci ;
une ou plusieurs deuxièmes électrodes (123) situées le long d'un deuxième segment (162) du guide d'ondes optiques pour former un deuxième segment modulateur (120) avec celui-ci ; et,
un circuit d'attaque électrique (151, 152) configuré pour transmettre des signaux de commande RF aux premières et deuxièmes électrodes (113, 123) à la fois, pour moduler une porteuse optique (101) se propageant le long du guide d'ondes optiques ;
dans lequel le modulateur optique segmenté est configuré de sorte que le deuxième segment modulateur (120) soit optiquement connecté en série au premier segment modulateur (110), et **caractérisé en ce que** les premier et deuxième segments de modulateur (110, 120) modulent la porteuse optique dans des régions de fréquence (201, 202) distinctes, dans lequel une réponse spectrale (211, 212) du premier segment modulateur et une réponse spectrale (211, 212) du deuxième segment modulateur ne se chevauchent pas, au moins en partie, dans les régions de fréquence distinctes.

2. Appareil selon la revendication 1, dans lequel le circuit d'attaque électrique (151, 152) est configuré pour fournir les signaux de commande RF aux premières et deuxièmes électrodes (113, 123) à la fois, pour moduler une même valeur de données sur la porteuse optique (101) dans une même période de symbole.

3. Appareil selon la revendication 2, dans lequel les une ou plusieurs premières électrodes (113) ont une longueur différente des une ou plusieurs deuxièmes électrodes (123).

4. Appareil selon l'une des revendications 1, 2 ou 3, dans lequel la pluralité d'électrodes comprennent un filtre RF à bande passante (141 ; 340) situé dans un chemin de signal allant du circuit d'attaque électrique (151, 152) aux électrodes (113, 123) du premier ou du deuxième segment modulateur (110, 120).

5. Appareil selon la revendication 4, dans lequel le filtre RF à bande passante (141, 340) comprend au moins un coupleur RF directionnel (440, 540).

6. Appareil selon la revendication 5, dans lequel le au moins un coupleur RF directionnel (440, 540) comprend au moins un coupleur RF bidirectionnel.

7. Appareil selon la revendication 5, dans lequel le au moins un coupleur RF directionnel (440, 540) comporte un segment d'extrémité de l'une des premières et deuxièmes électrodes (113, 123) .

8. Appareil selon l'une des revendications 4 à 7, dans lequel le filtre RF à bande passante (340) est connecté électriquement entre les premier et deuxième segments de modulateur (310, 320).

9. Appareil selon la revendication 8, dans lequel les premier et deuxième segments de modulateur (510, 520) comprennent respectivement deux premières électrodes (113a, 113c) et deux deuxièmes électrodes (123a, 123c), et dans lequel le filtre RF à bande passante (540) comprend des premier et deuxième coupleurs RF bidirectionnels (541, 542) connectant les extrémités de sortie des deux premières électrodes aux extrémités d'entrée des deux deuxièmes électrodes, dans lequel les premier et deuxième coupleurs RF bidirectionnels se croisant entre les premières et deuxièmes électrodes (113, 123).

10. Appareil selon l'une des revendications 4 à 9, dans lequel le filtre RF à bande passante (141, 340) a une bande passante qui s'étend au-delà d'une largeur de bande de modulation de 3 dB du deuxième segment modulateur (110, 120).

11. Appareil selon l'une des revendications 1, 2 ou 3, dans lequel les une ou plusieurs premières électrodes (123) comprennent une ou plusieurs électrodes à tronçons résonants (1023) ayant une résonance à une fréquence de commande RF du circuit d'attaque électrique (151, 152).

12. Appareil selon la revendication 11, dans lequel les une ou plusieurs deuxièmes électrodes (113) sont configurées pour fonctionner comme des électrodes à ondes progressives (1013) pour les signaux de commande RF du circuit d'attaque électrique (151, 152).

13. Appareil selon l'une des revendications 11 ou 12, dans lequel le premier segment (162) du guide d'ondes optiques comprend un segment modulant (1063) et un segment non modulant, dans lequel le segment modulant a une longueur d'au plus la moitié de l'une des électrodes à tronçons résonants (1023).

14. Appareil selon l'une des revendications 11, 12, ou 13, dans lequel l'électrode à tronçon résonant (1113 ; 1123) comprend un segment (1113₂ ; 1123₂) s'étendant à l'écart du guide d'ondes optiques (160).

15. Appareil selon l'une des revendications 11 à 14 dans lequel la pluralité d'électrodes comprennent en outre une ou plusieurs troisièmes électrodes (813, 823, 833) situées le long d'un troisième segment du guide d'ondes optiques pour former un troisième segment modulateur (810, 820, 830) avec celui-ci, comprenant un filtre RF à bande passante (841, 842) disposé dans un chemin de signal allant du circuit d'attaque électrique (851, 852, 853) aux une ou plusieurs troisièmes électrodes, dans lequel les une ou plusieurs troisièmes électrodes sont configurées comme des électrodes à ondes progressives pour les signaux de commande RF qui leur sont fournis.
